# EUROPÄISCHE PATENTSCHRIFT

(11) **EP 3 503 782 B1**
(45) Veröffentlichungstag und Bekanntmachung des Hinweises auf die Patenterteilung: **07.10.2020**
(21) Anmeldenummer: 17748739.4
(22) Anmeldetag: 03.08.2017
(51) Int. Cl.: A47J 43/08, B01F 7/30

(54) **GETRIEBEEINHEIT FÜR EINE KÜCHENMASCHINE**
TRANSMISSION UNIT FOR A FOOD PROCESSOR
UNITÉ DE TRANSMISSION POUR ROBOT DE CUISINE

(30) Priorität: 26.08.2016 DE 102016216108
(43) Veröffentlichungstag der Anmeldung: 03.07.2019
(73) Patentinhaber: BSH Hausgeräte GmbH, 81739 München (DE)
(72) Erfinder: KOVACIC, Peter, 3303 Gomilsko (SI); CATER, Matej, 3301 Petrovce (SI); STROJANSEK, Aleksander, 3331 Nazarje (SI)
(86) Internationale Anmeldenummer: PCT/EP2017/069629
(87) Internationale Veröffentlichungsnummer: WO 2018/036780

(56) Entgegenhaltungen:
- DE-A1- 2 551 842
- DE-A1-102005 040 545
- DE-A1-102012 206 162
- DE-B- 1 219 643
- GB-A- 2 398 851
- GB-A- 2 520 937

## Beschreibung

### Gebiet der Erfindung

Die Erfindung betrifft eine Getriebeeinheit für eine Küchenmaschine. Des Weiteren betrifft die Erfindung eine Küchenmaschine mit einer Getriebeeinheit.

### Hintergrund der Erfindung

Getriebeeinheiten für Küchenmaschinen erfüllen innerhalb einer Küchenmaschine die Aufgabe, eine von einer Eingangswelle zur Verfügung gestellte Drehgeschwindigkeit und Drehmoment in die jeweiligen Drehgeschwindigkeiten und Drehmomente von einer oder mehreren Zapfwellen umzusetzen.

In der deutschen Patentschrift DE 25 51 842 C3 ist ein elektromotorisch betriebenes Antriebsaggregat für Küchenmaschinen beschrieben, das ein Planetengetriebe mit einer Kegelradverzahnung aufweist, dessen Planetenrad mit einer geneigten Achse umläuft und mit seiner Achse die Achse des Zentralrades schneidet. Dabei kämmt das Planetenrad sowohl mit den Zähnen des Zentralrades als auch mit denen eines konzentrisch hierzu angeordneten innenverzahnten äußeren Zahnkranzes und bewegt bei seiner Taumelbewegung um das Zentralrad einen auf der Achse des Zentralrades drehbar angeordneten Lagerkörper mit, sodass der Lagerkörper auf diese Weise als Zapfwelle mit stark untersetzter Drehzahl verwendet werden kann.

Die DE 10 2012 206162 A1 der Anmelderin zeigt eine Küchenmaschine mit einer Getriebeeinheit, die eine Vielzahl von oberseitig austretenten Ausgangswellen hat. Die Getriebeeinheit weist hierzu ein Planentengetriebe auf, deren Trägereinheit im oberen Bereich angeordnet ist. Weiterer druckschriftlicher Stand der Technik ist in der GB 2 520 937 A gezeigt.

### Der Erfindung zugrundeliegende Aufgabe

Es ist Aufgabe der Erfindung, eine kompakte und platzsparende Getriebeeinheit für eine Küchenmaschine zur Verfügung zu stellen. Darüber hinaus ist es Aufgabe der Erfindung, eine Getriebeeinheit für Küchenmaschinen zur Verfügung zu stellen, die das Auftreten von Unwuchten und Vibrationen zu vermeiden hilft. Zusätzlich ist es Aufgabe der Erfindung, die Getriebeeinheit so auszulegen, dass Probleme infolge der bei der Herstellung von Kunststoffspritzteilen und Druckgussteilen auftretenden Schwindung verringert beziehungsweise vollständig vermieden werden.

### Erfindungsgemäße Lösung

Diese Aufgabe wird gelöst durch eine Getriebeeinheit mit den Merkmalen des Patentanspruchs 1, durch ein Küchengerät mit den Merkmalen des Patentanspruch 13, durch eine Getriebeeinheit mit den Merkmalen des Patentanspruchs 14 und durch ein Küchengerät mit den Merkmalen des Patentanspruch 15.

Die Lösung der gestellten Aufgabe gelingt durch Bereitstellen einer Getriebeeinheit, welche eine antriebsseitige Eingangswelle und eine oder mehrere abtriebsseitige erste Ausgangswellen umfasst, die an einer Oberseite der Getriebeeinheit austreten. Die Getriebeeinheit umfasst darüber hinaus eine im unteren Bereich der Getriebeeinheit angeordnete rotierbare Trägereinheit und ein oder mehrere in der rotierbaren Trägereinheit gelagerte Kupplungsstücke für abtriebsseitige zweite Ausgangswellen. Die Getriebeeinheit weist drei oder mehr übereinander angeordnete Getriebestufen auf, die dazu ausgelegt sind, eine Rotation der antriebsseitigen Eingangswelle in eine jeweilige Rotation der abtriebsseitigen ersten Ausgangswellen, der Kupplungsstücke für abtriebsseitige zweite Ausgangswellen und der rotierbaren Trägereinheit umzusetzen.

An der Oberseite der Getriebeeinheit werden eine oder mehrere erste Ausgangswellen zum Ankoppeln von Zubehörteilen wie beispielsweise eines Mixers, eines Universalzerkleinerers, einer Reibe und beliebigen anderen Zubehörteilen zur Verfügung gestellt. An der Unterseite der Getriebeeinheit ist eine rotierbare Trägereinheit für das Rührwerk vorgesehen, in der die ein oder mehreren Kupplungsstücke für Rühr- oder Knetwerkzeuge rotierbar gelagert sind. Die Getriebeeinheit setzt die Rotation der Eingangswelle in die verschiedenen Drehgeschwindigkeiten und Drehmomente für die abtriebsseitigen ersten Ausgangswellen, die Kupplungsstücke für die abtriebsseitigen zweiten Ausgangswellen und die rotierbare Trägereinheit um.

Zur Bereitstellung der verschiedenen benötigten Drehmomente und Drehgeschwindigkeiten weist die Getriebeeinheit drei oder mehr übereinander angeordnete Getriebestufen auf. Es hat sich herausgestellt, dass eine Anordnung von drei oder mehr Getriebestufen übereinander zu einer kompakten und platzsparenden Auslegung der Getriebeeinheit führt. Insbesondere wird durch die Anordnung der verschiedenen Getriebestufen übereinander eine symmetrische oder zumindest weitgehend symmetrische Auslegung ermöglicht, die die Entstehung von Unwuchten und Vibrationen sowie eine unsymmetrische Schwindung von Kunststoffspritzteilen oder Druckgussteilen zu vermeiden hilft. Für die einzelnen Getriebestufen können beispielsweise Planetengetriebestufen verwendet werden, welche eine drehsymmetrische Auslegung der verschiedenen Getriebestufen ermöglichen und sich problemlos übereinander anordnen lassen. Dabei kann die Übertragung von Drehmomenten und Drehgeschwindigkeiten zwischen den einzelnen Getriebestufen beispielsweise über eine oder mehrere zentrale Wellen oder zentrale Hohlwellen erfolgen, die hierzu in unterschiedliche Abschnitte aufgeteilt werden können.

Die Verwendung von mehreren übereinander angeordneten Getriebestufen bietet darüber hinaus den Vorteil, dass die einzelnen Getriebestufen ohne die Getriebestufen voneinander trennende Zwischenwände ausgelegt werden können, wobei die einzelnen Zahnräder der verschiedenen Getriebestufen einander gegenseitig positionieren und fixieren, so dass eine selbstjustierende Anordnung der Zahnräder der verschiedenen übereinander angeordneten Getriebestufen in dem gemeinsamen Gehäuse ermöglicht wird. Durch diese selbstjustierende Anordnung der Zahnräder der verschiedenen übereinander angeordneten Getriebestufen wird eine besonders platzsparende und kompakte Auslegung der Getriebeeinheit ermöglicht.

In Bezug auf die Getriebeeinheit sollen die Begriffe "oben" und "unten" in Hinblick auf eine in eine Küchenmaschine eingebaute Getriebeeinheit verstanden werden, so dass die Oberseite der Getriebeeinheit der Oberseite Küchenmaschine entspricht und die Unterseite des Getriebes dem Rührwerk zur Aufnahme von Rühr-, Knet und anderen Werkzeugen entspricht.

Eine erfindungsgemäße Küchenmaschine umfasst eine vorstehend beschriebene Getriebeeinheit. Die Getriebeeinheit stellt sämtliche von der Küchenmaschine an der Oberseite und für das Rührwerk benötigten Antriebswellen zur Verfügung.

Eine weitere erfindungsgemäße Getriebeeinheit umfasst eine antriebsseitige Eingangswelle, eine oder mehrere abtriebsseitige erste Ausgangswellen, die an einer Oberseite der Getriebeeinheit austreten, wobei die eine oder mehreren ersten Ausgangswellen zueinander und zu der antriebsseitigen Eingangswelle koaxial angeordnet sind, und eine im unteren Bereich der Getriebeeinheit angeordnete rotierbare Trägereinheit. Die Getriebeeinheit weist zwei oder mehrere in der rotierbaren Trägereinheit gelagerte Kupplungsstücke für abtriebsseitige zweite Ausgangswellen auf, die koaxial zueinander angeordnet sind und mit unterschiedlichen Rotationsgeschwindigkeiten antreibbar sind.

Durch die Getriebeeinheit werden an der Oberseite der Getriebeeinheit mehrere erste Ausgangswellen in koaxialer Anordnung zur Verfügung gestellt, also beispielweise als Innenwelle, die von einer oder mehreren Hohlwellen umgeben ist. Dadurch können unterschiedliche Drehgeschwindigkeiten und Drehmomente zur Verfügung gestellt werden, und das jeweilige Zubehörteil kann dann an die jeweils passende Ausgangswelle angekoppelt werden. Auch innerhalb der zum Antrieb des Rührwerks dienenden rotierbaren Trägereinheit werden mehrere koaxial zueinander angeordnete Kupplungsstücke bereitgestellt, die unterschiedliche Drehgeschwindigkeiten und Drehmomente bereitstellen. Die Rühr-, Knet- und sonstigen Werkzeuge können somit an unterschiedlich rotierende Kupplungsstücke angekuppelt werden.

### Bevorzugte Ausgestaltungen der Erfindung

Vorzugsweise sind die übereinander angeordneten Getriebestufen konzentrisch zueinander angeordnet. Dadurch wird eine kompakte, symmetrische und platzsparende Anordnung der Getriebestufen erreicht. Insbesondere wird durch die konzentrische Anordnung erreicht, dass eine unsymmetrische Schwindung bei der Herstellung der Teile und Unwuchten oder Vibrationen beim Betrieb der Getriebeeinheit vermieden werden.

Vorzugsweise sind die übereinander angeordneten Getriebestufen jeweils drehsymmetrisch bezüglich einer zentralen Achse der Getriebeeinheit ausgebildet. Durch die drehsymmetrische Auslegung der Getriebestufen wird in jeder Getriebestufe eine gleichmäßige Lastverteilung in allen radialen Richtungen senkrecht zur zentralen Achse erreicht. Infolge davon wird das Auftreten von Unwuchten oder Vibrationen während des laufenden Betriebs verringert beziehungsweise vermieden.

Vorzugsweise sind zumindest einige der übereinander angeordneten Getriebestufen innerhalb eines gemeinsamen Gehäuses der Getriebeeinheit angeordnet, wobei zwischen den Getriebestufen keine das Gehäuse unterteilenden Zwischenwandungen vorgesehen sind. Hierzu sind die Zahnräder der einzelnen Getriebestufen innerhalb des gemeinsamen Gehäuses so angeordnet beziehungsweise gelagert, dass keine zusätzliche Fixierung durch Zwischenwandungen erforderlich ist. Durch den Verzicht auf Zwischenwandungen werden die Komplexität der Getriebeeinheit und der bauliche Aufwand deutlich reduziert, was zu verringerten Kosten führt. Darüber hinaus kann die Getriebeeinheit infolge des Verzichts auf Zwischenwandungen kompakter und platzsparender als bisher gebaut werden.

Vorzugsweise sind zumindest einige der übereinander angeordneten Getriebestufen innerhalb eines gemeinsamen Gehäuses der Getriebeeinheit angeordnet, wobei zumindest einige der im gemeinsamen Gehäuse angeordneten Getriebestufen Zahnräder aufweisen, wobei die Zahnräder der verschiedenen Getriebestufen im Gehäuse einander gegenseitig in Position halten und fixieren. Beispielsweise können innerhalb des Gehäuses beziehungsweise an den einzelnen Zahnrädern beispielweise Vorsprünge, Ausnehmungen, Führungen, Lager und sonstige Positionierelemente vorgesehen sein, um die einzelnen Zahnräder der einzelnen Getriebestufen relativ zueinander in Position zu halten.

Vorzugsweise weisen zumindest einige der im gemeinsamen Gehäuse angeordneten Getriebestufen Zahnräder auf, wobei die Zahnräder der verschiedenen Getriebestufen in dem gemeinsamen Gehäuse der Getriebeeinheit ohne Zwischenwandungen angeordnet sind. Infolge ihrer Lagerung und Positionierung relativ zueinander füllen die Zahnräder der verschiedenen Getriebestufen den zur Verfügung stehenden Raum innerhalb des Gehäuses aus und bilden in ihrem Zusammenwirken die verschiedenen Getriebestufen.

Vorzugsweise weist die Getriebeeinheit ein Gehäuse auf, das einen Deckel, ein umlaufendes Gehäuseteil und die rotierbare Trägereinheit umfasst. Durch die an der Unterseite des Gehäuses angeordnete rotierbare Trägereinheit führen die darin gelagerten Rühr- oder Knetwerkzeuge eine zusätzliche Rotationsbewegung um die zentrale Achse aus, wodurch das Rührgut besser durchmischt wird.

Vorzugsweise weist die Getriebeeinheit eine zentrale Welle mit mehreren Wellenabschnitten auf, die mit unterschiedlichen Rotationsgeschwindigkeiten betreibbar sind. Durch die Unterteilung der zentralen Welle in unterschiedliche Teilabschnitte kann erreicht werden, dass die unterschiedlichen Teilabschnitte unterschiedliche Funktionen innerhalb der Getriebeeinheit wahrnehmen. Dadurch lassen sich bei Beibehaltung einer relativ kompakten Form Getriebeeinheiten höherer Komplexität realisieren.

Vorzugsweise weist die Getriebeeinheit eine zentrale Welle mit mehreren Wellenabschnitten auf, die mit unterschiedlichen Rotationsgeschwindigkeiten betreibbar sind, wobei die antriebsseitige Eingangswelle einen obersten Wellenabschnitt bildet und an der Oberseite der Getriebeeinheit austritt. Durch die Aufteilung der zentralen Welle in mehrere Wellenabschnitte können die Wellenabschnitte unterhalb der antriebsseitigen Eingangswellen für andere Zwecke genutzt werden, beispielsweise als Ausgangswellen. Dadurch wird eine kompakte und platzsparende Auslegung der Getriebeeinheit ermöglicht.

Vorzugsweise sind die eine oder mehreren ersten Ausgangswellen zu der antriebsseitigen Eingangswelle koaxial angeordnet. Durch die koaxiale Anordnung der Eingangswelle und der ein oder mehreren ersten Ausgangswellen wird eine symmetrische Auslegung der Getriebeeinheit ermöglicht, wodurch die Entstehung von Unwuchten und Vibrationen vermieden wird.

Vorzugsweise weist die Getriebeeinheit zwei oder mehr abtriebsseitige erste Ausgangswellen auf, die zueinander koaxial sind. Die zwei oder mehr abtriebsseitigen ersten Ausgangswellen an der Oberseite der Getriebeeinheit können zum Antrieb verschiedener Zubehörteile, Aufsätze und Gerätschaften genutzt werden, wobei den verschiedenen Zubehörteilen unterschiedliche Drehgeschwindigkeiten und Drehmomente zur Verfügung gestellt werden.

Vorzugsweise ist mindestens eine der ersten Ausgangswellen als Hohlwelle ausgebildet. Die Hohlwelle kann eine innere Ausgangswelle umschließen, sodass an der Oberseite der Getriebeeinheit mehrere Ausgangswellen mit unterschiedlichen Rotationsgeschwindigkeiten und Drehmomenten in konzentrischer Anordnung zur Verfügung gestellt werden können.

Vorzugsweise ist mindestens eine der ersten Ausgangswellen als Hohlwelle ausgebildet, welche die antriebsseitige Eingangswelle umschließt. Die antriebsseitige Eingangswelle kann ebenfalls zur Oberseite der Getriebeeinheit geführt und dort als Zapfwelle verwendet werden.

Vorzugsweise sind die ein oder mehreren Kupplungsstücke für abtriebsseitige zweite Ausgangswellen in der rotierbaren Trägereinheit exzentrisch gelagert. Die Kupplungsstücke für abtriebsseitige zweite Ausgangswellen dienen insbesondere zum Antrieb von Rühr- oder Knetwerkzeugen. Durch die exzentrische Lagerung in der rotierbaren Trägereinheit wird erreicht, dass die Rühr- oder Knetwerkzeuge zusätzlich zur Rotation um die eigene Achse auch eine durch die Rotation der Trägereinheit verursachte Drehung um die zentrale Achse der Getriebeeinheit durchführen. Durch diese komplexe Bewegung wird die Durchmischung des Rührguts verbessert.

Vorzugsweise sind die ein oder mehreren Kupplungsstücke für zweite Ausgangswellen dazu ausgelegt, sich in der rotierbaren Trägereinheit gelagert um eine zentrale Achse der Getriebeeinheit zu drehen und zugleich um die eigene Achse zu rotieren. Die Kupplungsstücke für zweite Ausgangswellen dienen in der Regel zum Antrieb von Rühr- oder Knetwerkzeugen. Durch die beschriebene Bewegung der zweiten Ausgangswellen wird eine verbesserte Durchmischung des Rührguts erzielt.

Vorzugsweise umfassen die drei oder mehr übereinander angeordneten Getriebestufen mindestens eine Planetengetriebestufe. Die Verwendung von Planetengetriebestufen hat den Vorteil, dass am Sonnenrad, am Planetenrad und am Planetenträger der Planetengetriebestufe Rotationen mit unterschiedlichen Drehzahlen abgreifbar sind. Darüber hinaus sind Planetengetriebestufen kompakt und platzsparend und verursachen infolge der symmetrischen Lastverteilung keine Unwuchten und unsymmetrische Geometrie infolge von Schwindung bei der Herstellung.

Vorzugsweise umfassen die drei oder mehr übereinander angeordneten Getriebestufen mindestens drei Planetengetriebestufen. Planetengetriebestufen lassen sich gut übereinander anordnen, wobei über zentrale Wellen oder Hohlwellen eine Kopplung zwischen verschiedenen Getriebestufen möglich ist.

Vorzugsweise umfassen die drei oder mehr übereinander angeordneten Getriebestufen eine erste Planetengetriebestufe, die eine Rotation der mit einem Sonnenrad verbundenen Eingangswelle in eine langsamere Rotation eines Planetenträgers umsetzt, der mit einer der einen oder mehreren ersten Ausgangswellen verbunden ist. Insofern kann durch diese erste Planetengetriebestufe an der Oberseite des Planetengetriebes eine erste Ausgangswelle mit vergleichsweise langsamer Rotationsgeschwindigkeit bereitgestellt werden.

Vorzugsweise umfassen die drei oder mehr übereinander angeordneten Getriebestufen eine erste Planetengetriebestufe, wobei die erste Planetengetriebestufe ein Sonnenrad, mindestens ein an einem Planetenträger gelagertes Planetenrad und einen innenverzahnten Zahnkranz umfasst, wobei das Sonnenrad mit der antriebsseitigen Eingangswelle verbunden ist und wobei der Planetenträger mit einer abtriebsseitigen ersten Ausgangswelle verbunden ist. Bei einer derartigen Ausbildung der ersten Planetengetriebestufe liefert der Planetenträger eine geeignete Rotationsgeschwindigkeit und ein geeignetes Drehmoment für die abtriebsseitige erste Ausgangswelle.

Vorzugsweise umfassen die drei oder mehr übereinander angeordneten Getriebestufen eine Planetengetriebestufe, wobei eines der Planetenräder der Planetengetriebestufe eines der Kupplungsstücke für abtriebsseitige zweite Ausgangswellen antreibt. Ein Planetenrad der Planetengetriebestufe rotiert zum einen um das Sonnenrad und wird dabei am innen verzahnten Zahnkranz abgewickelt. Zusätzlich zu dieser Rotation um das Sonnenrad führt das Planetenrad eine Rotation um die eigene Achse durch. Infolge dieser komplexen Rotationsbewegung sind die Planetenräder einer Planetengetriebestufe hervorragend zum Antrieb von Rühr- oder Knetwerkzeugen geeignet, weil durch die komplexe Rotationsbewegung der Rühr- oder Knetwerkzeuge eine gute Durchmischung des jeweiligen Rührguts bewirkt wird.

Vorzugsweise ist das Sonnenrad der Planetengetriebestufe auf der rotierbaren Trägereinheit gelagert, wobei die rotierbare Trägereinheit als Planetenträger der Planetengetriebestufe fungiert. Bei dieser Anordnung des Sonnenrads direkt auf der rotierbaren Trägereinheit steht das Sonnenrad in unmittelbarem Kontakt mit der rotierbaren Trägereinheit und der Kraftfluss verläuft nahe an der zentralen Achse der Getriebeeinheit. Der Vorteil dieser Anordnung ist, dass das Sonnenrad unmittelbar durch die rotierbare Trägereinheit gestützt wird und sich auf diese Weise eine platzsparende Zahnradanordnung ergibt, bei der die Zahnräder einander gegenseitig stützen.

Vorzugsweise ist das Sonnenrad der Planetengetriebestufe oberhalb der rotierbaren Trägereinheit gelagert, wobei die rotierbare Trägereinheit als Planetenträger der Planetengetriebestufe fungiert und wobei zwischen dem Sonnenrad und der rotierbaren Trägereinheit ein Spalt ausgebildet ist. Bei dieser Anordnung verläuft der Kraftfluss über die Planetenräder der Planetengetriebestufe zur rotierbaren Trägereinheit, so dass sich ein aufgeweiteter, nach außen verlagerter Verlauf des Kraftflusses ergibt. Durch diese Verlagerung der Kraftübertragung nach außen wird die Stabilität, Festigkeit und Belastbarkeit des Antriebs der rotierbaren Trägereinheit erhöht.

Vorzugsweise umfassen die drei oder mehr übereinander angeordneten Getriebestufen eine zweite Planetengetriebestufe, wobei die zweite Planetengetriebestufe ein Sonnenrad und mindestens ein an der rotierbaren Trägereinheit als Planetenträger gelagertes Planetenrad umfasst, wobei eines der Planetenräder mit einem der Kupplungsstücke für abtriebsseitige zweite Ausgangswellen verbunden ist. Durch das zusätzliche Planetenrad der zweiten Planetengetriebestufe wird das Kupplungsstück mit einer geeigneten Rotationsgeschwindigkeit angetrieben.

Vorzugsweise umfassen die drei oder mehr übereinander angeordneten Getriebestufen eine dritte Planetengetriebestufe, wobei die dritte Planetengetriebestufe ein Sonnenrad, mindestens ein an der rotierbaren Trägereinheit als Planetenträger gelagertes Planetenrad und einen innenverzahnten Zahnkranz umfasst, wobei eines der Planetenräder mit einem der Kupplungsstücke für abtriebsseitige zweite Ausgangswellen verbunden ist. Durch das Planetenrad der dritten Planetengetriebestufe wird ein Antrieb der zweiten Ausgangswelle mit einer geeigneten Rotationsgeschwindigkeit ermöglicht. Zusätzlich wird durch das Abwälzen des Planetenträgers an dem innen verzahnten Zahnkranz die Drehung der rotierbaren Trägereinheit festgelegt.

Vorzugsweise tritt die antriebsseitige Eingangswelle an der Oberseite der Getriebeeinheit aus. Dadurch ist die antriebsseitige Eingangswelle an der Oberseite der Getriebeeinheit als Zapfwelle nutzbar, welche eine vergleichsweise hohe Rotationsgeschwindigkeit zur Verfügung stellt.

Vorzugsweise ist durch die eine oder mehreren koaxial zueinander an der Oberseite der Getriebeeinheit austretenden abtriebsseitigen ersten Ausgangswellen und die antriebsseitige Eingangswelle eine Vielzahl von unterschiedlichen Aufsätzen oder Gerätschaften antreibbar. An der Oberseite der Küchenmaschine werden durch die Getriebeeinheit mehrere koaxial zueinander angeordnete Zapfwellen zur Verfügung gestellt, die zum Antrieb von Aufsätzen, Gerätschaften und Zubehörteilen dienen, welche beispielsweise an der Oberseite der Küchenmaschine aufgesetzt, aufgesteckt oder in sonstiger Weise arretiert werden können, beispielsweise mittels einer Bajonettkupplung. Durch die Vielzahl der koaxial zueinander angeordneten Zapfwellen kann erreicht werden, dass jeder Aufsatz beziehungsweise jedes Werkzeug mit einer geeigneten Rotationsgeschwindigkeit und einem geeigneten Drehmoment angetrieben werden kann.

Vorzugsweise weist die Getriebeeinheit zwei oder mehrere in der rotierbaren Trägereinheit gelagerte Kupplungsstücke für abtriebsseitige zweite Ausgangswellen auf, die mit unterschiedlichen Rotationsgeschwindigkeiten antreibbar sind. Die Drehrichtungen der Kupplungsstücke können dabei gleich oder unterschiedlich sein. Dabei können die zwei oder mehreren Kupplungsstücke koaxial zueinander angeordnet sein oder eine andere Orientierung relativ zueinander aufweisen. Die Kupplungsstücke können beispielsweise verdreht zur senkrecht verlaufenden zentralen Drehachse orientiert sein, so dass die jeweiligen Drehachsen die senkrecht verlaufende zentrale Drehachse der Getriebeeinheit nicht kreuzen. In der rotierbaren Trägereinheit können die Kupplungsstücke beispielsweise spiegelsymmetrisch zueinander angeordnet sein. Mittels der zwei oder mehr an der rotierbaren Trägereinheit bereitgestellten Kupplungsstücke für abtriebsseitige zweite Ausgangswellen können insbesondere unterschiedliche Rühr- oder Knetwerkzeuge angetrieben werden, wobei für jedes Rühr- oder Knetwerkzeug eine geeignete Rotationsgeschwindigkeit und Drehrichtung und ein geeignetes Drehmoment zur Verfügung gestellt werden kann. Beispielsweise ist es vorteilhaft, einen Schneebesen mit einer vergleichsweise hohen Rotationsgeschwindigkeit anzutreiben, wobei das benötigte Drehmoment relativ gering ist. Bei einem Knethaken dagegen ist es vorteilhaft, den Knethaken mit relativ geringer Rotationsgeschwindigkeit, dafür aber mit relativ hohem Drehmoment zu betreiben, um auf diese Weise auch schwere Teige kneten zu können.

Vorzugsweise weist die Getriebeeinheit zwei oder mehrere in der rotierbaren Trägereinheit gelagerte Kupplungsstücke für abtriebsseitige zweite Ausgangswellen auf, die mit unterschiedlichen Rotationsgeschwindigkeiten antreibbar sind und dazu ausgelegt sind, unterschiedliche Rühr- und Knetwerkzeuge anzutreiben. Durch die zwei oder mehr Kupplungsstücke wird also eine Mehrzahl von unterschiedlichen Rotationsgeschwindigkeiten und Drehmomenten zur Verfügung gestellt.

Vorzugsweise weist die Küchenmaschine einen Arm auf, in den die vorstehend beschriebene Getriebeeinheit integriert ist. Da die aus mehreren übereinander angeordneten Getriebestufen aufgebaute Getriebeeinheit vergleichsweise kompakt und platzsparend aufgebaut ist, kann sie in den Arm der Küchenmaschine integriert werden. Die Getriebeeinheit stellt dann an der Oberseite des Arms der Küchenmaschine eine oder mehrere erste Ausgangswellen zum Betrieb von unterschiedlichen Aufsätzen und Zubehörteilen zur Verfügung. Darüber hinaus werden durch die Getriebeeinheit in der rotierbaren Trägereinheit an der Unterseite des Arms zwei oder mehrere Kupplungsstücke für abtriebsseitige zweite Ausgangswellen bereitgestellt, die beispielsweise zum Antrieb von Rühr- oder Knetwerkzeugen genutzt werden können.

Vorzugsweise weist die Küchenmaschine eine an der Oberseite der Küchenmaschine angeordnete Bajonettkupplung auf. Mittels der Bajonettkupplung können unterschiedliche Aufsätze und Zubehörteile mechanisch an der Oberseite der Küchenmaschine fixiert und von einer der ersten Ausgangswellen angetrieben werden.

### Kurzbeschreibung der Zeichnungen

Weitere vorteilhafte Ausgestaltungen werden nachfolgend anhand mehrerer in den Zeichnungen dargestellten Ausführungsbeispielen, auf welche die Erfindung jedoch nicht beschränkt ist, näher beschrieben.

Es zeigt schematisch:
- Figur 1:: Fig. 1 zeigt eine Ansicht einer Küchenmaschine mit einer in den Arm der Küchenmaschine integrierten Getriebeeinheit.
- Figur 2:: Fig. 2 zeigt eine schematische Darstellung der Getriebestufen einer Getriebeeinheit.
- Figur 3:: Fig. 3 zeigt eine detaillierte Darstellung der Getriebeeinheit im Längsschnitt.
- Figur 4a:: Fig. 4a zeigt den Kraftfluss durch die in Figur 3 gezeigte Getriebeeinheit.
- Figur 4b:: Fig. 4b zeigt den Kraftfluss durch eine weitere Getriebeeinheit, bei der zwischen dem ersten Sonnenrad und der rotierbaren Trägereinheit ein Spalt vorgesehen ist.
- Figur 5a:: Fig. 5a zeigt eine schematische Darstellung der Getriebestufen einer weiteren Getriebeeinheit.
- Figur 5b:: Fig. 5b zeigt eine schematische Darstellung der Getriebestufen einer weiteren Getriebeeinheit.

### Detaillierte Beschreibung von Ausführungen der Erfindung

Bei der nachfolgenden Beschreibung von bevorzugten Ausführungsformen der vorliegenden Erfindung bezeichnen gleiche Bezugszeichen gleiche oder vergleichbare Komponenten.

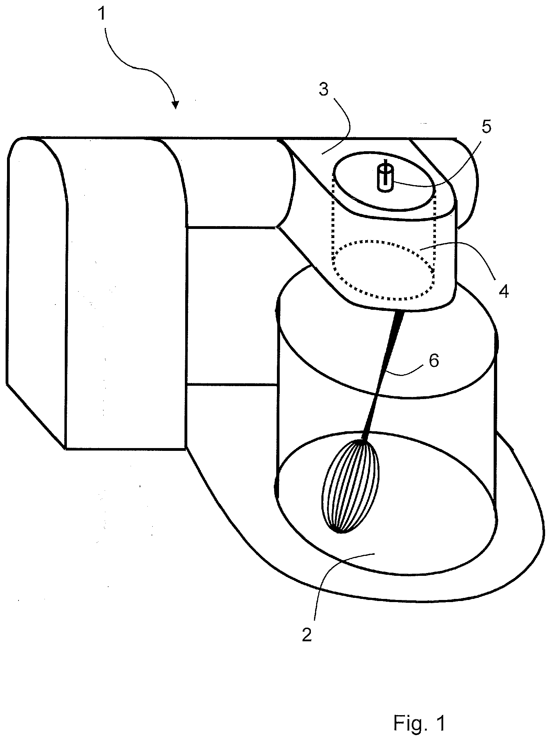

In Figur 1 ist eine Küchenmaschine 1 mit einer Rührschüssel 2 gezeigt, wobei die Küchenmaschine 1 über einen Arm 3 verfügt, der zum Auswechseln der Werkzeuge hochgeklappt werden kann. In den Arm 3 der Küchenmaschine ist eine Getriebeeinheit 4 integriert, die an ihrer Oberseite eine oder mehrere abtriebsseitige erste Ausgangswellen 5 zur Verfügung stellt, mit denen eine Mehrzahl von unterschiedlichen Aufsätzen angetrieben werden kann. Beispielsweise kann durch die an der Oberseite der Getriebeeinheit 4 austretenden Ausgangswellen ein Mixer, ein Universalzerkleinerer, ein Hobel, eine Reibe, ein Würfelscheider oder eine Zitruspresse etc. angetrieben werden. Hierzu kann beispielsweise an der Oberseite des Arms 3 oberhalb der Getriebeeinheit 4 eine entsprechende Bajonettkupplung vorgesehen sein. An der Unterseite der Getriebeeinheit 4 werden ein oder mehrere Kupplungsstücke für abtriebsseitige zweite Ausgangswellen zur Verfügung gestellt, die in einer rotierenden Trägereinheit gelagert sind und rotierend umlaufen. Diese Kupplungsstücke für zweite Ausgangswellen an der Unterseite der Getriebeeinheit 4 können beispielsweise zum Antrieb eines Rühr- oder Knetwerkzeugs 6, beispielsweise eines Knethakens oder eines Schneebesens genutzt werden. Die Kupplungsstücke für die zweiten Ausgangswellen werden vorzugsweise durch Planetenräder eines Planetengetriebes angetrieben, wobei ein Planetenrad das jeweilige Kupplungstück antreibt, in das eine Antriebswelle für ein Knet- oder Rührwerkzeug eingeschoben werden kann. Darüber hinaus kann auch die rotierbare Trägereinheit selbst, die mit dem Planetenträger des Planetengetriebes verbunden ist, als Zapfwelle mit stark untersetzter Drehzahl zum Antrieb von Werkzeugen benutzt werden, beispielsweise um einen Fleischwolf, eine Getreidemühle, einen Pastavorsatz oder einen Eisbereiter anzutreiben.

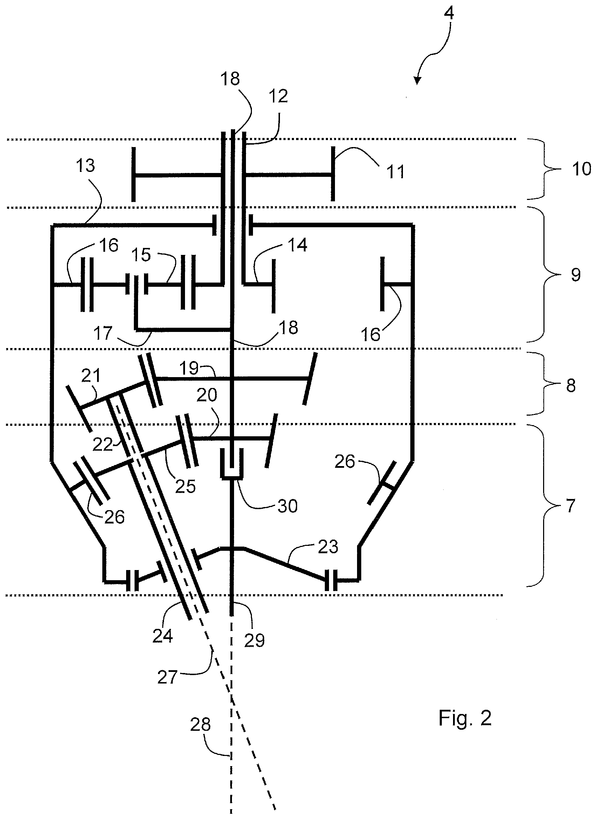

In Figur 2 ist eine schematische Ansicht der Getriebeeinheit 4 gezeigt, aus der zunächst erkennbar ist, dass die Getriebeeinheit 4 vier übereinander angeordnete Getriebestufen 7, 8, 9 und 10 umfasst, nämlich in der Reihenfolge von unten nach oben eine erste Getriebestufe 7, eine zweite Getriebestufe 8, eine dritte Getriebestufe 9 und eine vierte Getriebestufe 10. Die einzelnen Getriebestufen 7, 8, 9 und 10 sind übereinander angeordnet und konzentrisch zueinander ausgebildet, wobei jede der Getriebestufen 7 bis 10 als drehsymmetrische Getriebestufe realisiert ist.

Die vierte Getriebestufe 10 ist als Antriebsstufe der Getriebeeinheit 4 ausgebildet und umfasst eine Riemenscheibe 11, die mittels eines Zahnriemens von der Motoreinheit aus antreibbar ist. Die Riemenscheibe 11 ist mit einer antriebsseitigen Eingangswelle 12 verbunden, die als Hohlwelle ausgebildet ist. Diese antriebsseitige Eingangswelle 12 wird an der Oberseite der Getriebeeinheit 4 als Zapfwelle zur Verfügung gestellt und kann beispielsweise zum Antrieb eines Universalzerkleinerers, eines Hobels, einer Reibe etc. genutzt werden.

Die erste, zweite und dritte Getriebestufe 7, 8, 9 sind innerhalb eines gemeinsamen Gehäuses 13 der Getriebeeinheit 4 übereinander angeordnet untergebracht. Dabei sind die erste, zweite und dritte Getriebestufe 7, 8, 9 jeweils als Planetengetriebestufen ausgebildet, wobei die erste und zweite Getriebestufe 7 und 8 eine Kegelradverzahnung aufweisen. Alternativ dazu könnten diese Planetengetriebestufen auch mit Stirnrädern anstatt von Kegelrädern realisiert werden.

Das dritte Sonnenrad 14 der dritten Getriebestufe 9 ist mit der antriebsseitigen Eingangswelle 12 verbunden. Wenn sich die Riemenscheibe 11 dreht, wird daher auch das dritte Sonnenrad 14 in Rotation versetzt. Die dritte Getriebestufe 9 umfasst außerdem mindestens ein drittes Planetenrad 15, das sowohl mit dem dritten Sonnenrad 14 als auch mit dem zweiten innenverzahnten Zahnkranz 16 kämmt, der an der Innenseite des Gehäuses 13 angebracht bzw. angeformt ist. Das mindestens eine dritte Planetenrad 15 ist an einem Planetenträger 17 gelagert, der mit der abtriebsseitigen Ausgangswelle 18 verbunden ist, die den oberen Abschnitt einer zentralen Welle bildet. Die abtriebsseitige Ausgangswelle 18 wird an der Oberseite der Getriebeeinheit 4 als Zapfwelle zur Verfügung gestellt und verläuft koaxial zur antriebsseitigen Eingangswelle 12, die als Hohlwelle ausgebildet ist und die abtriebsseitige Ausgangswelle 18 konzentrisch umschließt. Wenn das dritte Sonnenrad 14 in Rotation versetzt wird, bewegt sich das mindestens eine dritte Planetenrad 15 um das dritte Sonnenrad 14 herum und versetzt so den Planetenträger 17 in Rotation, der mit der abtriebsseitigen Ausgangswelle 18 verbunden ist. Dabei ist die Rotationsgeschwindigkeit des Planetenträgers 17 in der Regel geringer als die Rotationsgeschwindigkeit der antriebsseitigen Eingangswelle 12. Die abtriebsseitige Ausgangswelle 18 kann daher zum Antrieb von Aufsätzen verwendet werden, die eine vergleichsweise geringe Rotationsgeschwindigkeit benötigen, beispielsweise zum Antrieb eines Würfelschneiders oder einer Zitruspresse. Durch das Bereitstellen von mehreren koaxial zueinander ausgebildeten Zapfwellen an der Oberseite der Getriebeeinheit 4 können verschiedene Zubehörteile mit unterschiedlichen Anforderungen in Bezug auf Rotationsgeschwindigkeit und Drehmoment angetrieben werden.

Die abtriebsseitige Ausgangswelle 18 treibt darüber hinaus das zweite Sonnenrad 19 der zweiten Getriebestufe 8 sowie das erste Sonnenrad 20 der ersten Getriebestufe 7 an, die in dem in Figur 2 gezeigten Beispiel jeweils als Kegelräder ausgebildet sind. Innerhalb der zweiten Getriebestufe 8 ist ein zweites Planetenrad 21 vorgesehen, das mit dem zweiten Sonnenrad 19 kämmt und mit einem Kupplungsstück 22 für eine Ausgangswelle verbunden ist. Das Kupplungsstück 22 ist innerhalb der rotierbaren Trägereinheit 23 koaxial zu einer Hohlwelle 24 rotierbar gelagert und bewegt sich mit dem rotierbaren Trägereinheit 23 mit. Die Hohlwelle 24 ist ebenfalls in der rotierbaren Trägereinheit 23 rotierbar gelagert. Die Hohlwelle 24 wird durch die erste Getriebestufe 7 angetrieben und ist mit dem ersten Planetenrad 25 verbunden. Das erste Planetenrad 25 kämmt mit dem ersten Sonnenrad 20 sowie mit dem ersten innenverzahnten Zahnkranz 26, der an der Innenseite des Gehäuses 13 angebracht bzw. angeformt ist.

Infolge der Kegelradgeometrie verläuft die Ache 27 des Kupplungsstücks 22 und der Hohlwelle 24 schräg geneigt zur zentralen Achse 28 der Getriebeeinheit 4. Wenn das erste Planetenrad 25 durch das erste Sonnenrad 20 angetrieben wird, wird das erste Planetenrad 25 am ersten innenverzahnten Zahnkranz 26 abgewälzt. Das erste Planetenrad 25 bewegt sich um das erste Sonnenrad 20 herum und rotiert dabei um die eigene Achse. Insofern bewegen sich das Kupplungsstück 22 und die Hohlwelle 24 in einer Taumelbewegung rund um die zentrale Achse 28 der Getriebeeinheit 4, wobei das Kupplungsstück 22 und die Hohlwelle 24 dabei mit unterschiedlichen Geschwindigkeiten um die eigene Achse rotieren.

Sowohl das Kupplungsstück 22 als auch die Hohlwelle 24 können von der Unterseite der Getriebeeinheit 4 aus zum Antrieb von in die Getriebeeinheit 4 eingesteckten Knet- und Rührwerkzeugen genutzt werden, mit denen in der Rührschüssel 2 befindliches Rührgut aufgeschlagen, durchmischt bzw. geknetet werden kann. Dabei werden durch das Kupplungsstück 22 und die Hohlwelle 24 unterschiedliche Rotationsgeschwindigkeiten und unterschiedliche Drehmomente zur Verfügung gestellt. Das Kupplungsstück 22 rotiert mit höherer Geschwindigkeit als die Hohlwelle 24 und eignet sich daher insbesondere zum Antrieb eines Schneebesens. Dagegen stellt die mit langsamerer Drehgeschwindigkeit rotierende Hohlwelle 24 ein deutlich größeres Drehmoment zur Verfügung und eignet sich daher insbesondere zum Antrieb eines Knethakens, mit dem auch schwere Teige verarbeitet werden können. Durch die Bereitstellung des Kupplungsstücks 22 und der Hohlwelle 24 können verschiedene Rühr- und Knetwerkzeuge mit jeweils passender Geschwindigkeit und passendem Drehmoment angetrieben werden.

Alternativ dazu könnten als Zahnräder der Planetengetriebestufen auch Stirnräder anstelle von Kegelrädern verwendet werden. In diesem Fall würden die Drehachsen der Planetenräder parallel zur zentralen Achse der Getriebeeinheit stehen und zusammen mit der rotierbaren Trägereinheit um die zentrale Achse der Getriebeeinheit umlaufen.

Alternativ dazu könnten als Zahnräder der Planetengetriebestufen auch Hypoidräder anstelle von Kegelrädern verwendet werden. In diesem Fall würden die Drehachsen der Planetenräder schräg zur zentralen Achse der Getriebeeinheit verlaufen und die zentrale Achse nicht schneiden. Die Drehachsen der Planetenräder würden in einem gewissen Abstand an der zentralen Achse vorbeilaufen und zusammen mit der rotierbaren Trägereinheit um die zentrale Achse der Getriebeeinheit umlaufen. Dadurch wird beispielsweise ermöglicht, dass das jeweilige Knet- oder Rührwerkzeug das Bearbeitungsgut in der Schüssel umlaufend bearbeitet, wodurch der benötigte Durchmesser des jeweiligen Knet- oder Rührwerkzeugs verringert werden kann, so dass die benötigte Kraft reduziert wird.

Wenn das erste Planetenrad 25 angetrieben vom ersten Sonnenrad 20 am ersten innenverzahnten Zahnkranz 26 abgewälzt wird, wird durch diesen Umlaufs des ersten Planetenrads 25 die rotierbare Trägereinheit 23 angetrieben und in eine Rotationsbewegung versetzt. In der rotierbaren Trägereinheit 23 sind das Kupplungsstück 22 und die Hohlwelle 24 jeweils rotierbar gelagert, die daher mit der rotierbaren Trägereinheit 23 mitrotieren. Die rotierbare Trägereinheit 23 ist mit der abtriebsseitigen Ausgangswelle 29 verbunden, die durch die rotierbare Trägereinheit 23 in eine vergleichsweise langsame Rotation versetzt wird. Die abtriebsseitige Ausgangswelle 29 stellt den unteren Abschnitt der zentralen Welle der Getriebeeinheit 4 dar und ist über ein Drehlager 30 mit der abtriebsseitigen Ausgangswelle 18 gekoppelt. Die abtriebsseitige Ausgangswelle 29 kann an der Unterseite der Getriebeeinheit 4 als Zapfwelle für Zusatzgeräte genutzt werden, die eine vergleichsweise langsam rotierende Antriebswelle benötigen. Beispielsweise kann die abtriebsseitige Ausgangswelle 29 zum Antrieb eines Fleischwolfs, einer Getreidemühle, eines Pastavorsatzes, eines Eisbereiters etc. genutzt werden.

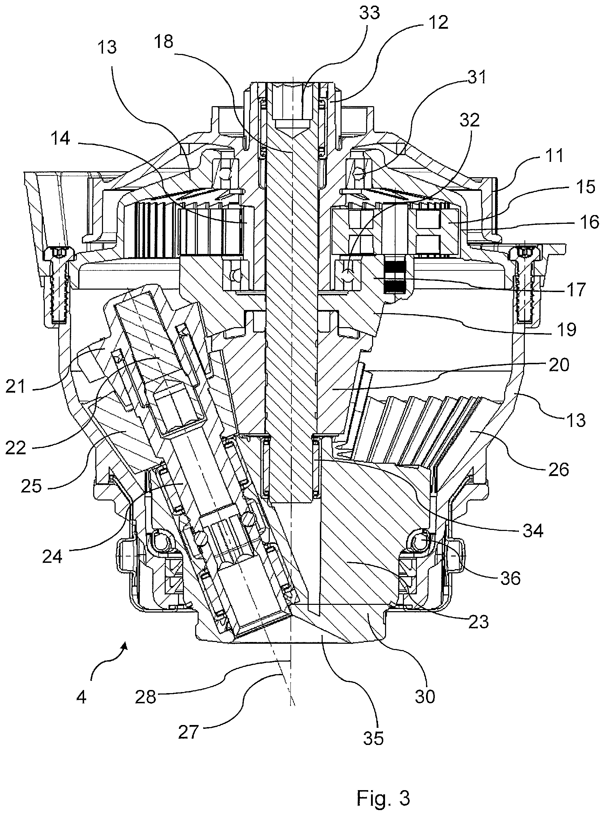

Figur 3 zeigt eine detaillierte Darstellung der Getriebeeinheit 4 im Längsschnitt, wobei die einzelnen Komponenten der Getriebeeinheit 4 bereits anhand der in Figur 2 gezeigten Schemadarstellung erläutert worden waren. In Figur 3 ist die Riemenscheibe 11 erkennbar, die mittels eines Zahnriemens angetrieben und in Rotation versetzt werden kann. Wie in Figur 3 gezeigt ist, ist die Riemenscheibe 11 noch oberhalb des Deckels des Gehäuses 13 angeordnet und überdeckt den oberen Teil des Gehäuses. Mit der Riemenscheibe 11 ist die antriebsseitige Eingangswelle 12 verbunden, die als Hohlwelle ausgebildet ist und an der Oberseite der Getriebeeinheit 4 als Zapfwelle zur Verfügung steht. Die Riemenscheibe ist darüber hinaus mit dem dritten Sonnenrad 14 der dritten Getriebestufe 9 verbunden, die unmittelbar unterhalb des Deckels des Gehäuses 13 angeordnet ist. Die dritte Getriebestufe 9 umfasst außerdem das mindestens eine dritte Planetenrad 15 sowie den zweiten innenverzahnten Zahnkranz 16. Unterhalb des mindestens einen dritten Planetenrads 15 ist der Planetenträger 17 zu erkennen, der seinerseits mit der zentralen abtriebsseitigen Ausgangswelle 18 verbunden ist, die an der Oberseite der Getriebeeinheit 4 nach außen austritt. Durch die Umlaufbewegung des mindestens einen dritten Planetenrads 15 um das dritte Sonnenrad 14 wird auch der Planetenträger 17 in eine Drehbewegung versetzt. Dabei sind zur Lagerung der antriebsseitigen Eingangswelle 12, des dritten Sonnenrads 14 sowie des Planetenträgers 17 zwei Wälzlager 31 und 32 vorgesehen. Der Planetenträger 17 ist mit der zentralen abtriebsseitigen Ausgangswelle 18 verbunden, die an der Oberseite der Getriebeeinheit 4 herausgeführt ist und über ein Mitnahmeprofil 33 entsprechendes Zubehör antreiben kann. Dabei wird das untere Ende der abtriebsseitigen Ausgangswelle 18 in einem Axiallager 34 gelagert, beispielsweise in einem Nadellager.

Wie aus Figur 3 erkennbar ist, ist der untere Abschnitt des Planetenträgers 17 zugleich als zweites Sonnenrad 19 ausgebildet und steht in kämmendem Eingriff mit dem zweiten Planetenrad 21. Mit der abtriebsseitigen Ausgangswelle 18 ist darüber hinaus das erste Sonnenrad 20 drehfest verbunden, dass sich in kämmendem Eingriff mit dem ersten Planetenrad 25 befindet. Das erste Planetenrad 25 steht darüber hinaus in kämmendem Eingriff mit dem ersten innenverzahnten Zahnkranz 26, der in Figur 3 gut zu erkennen ist. Das zweite Planetenrad 21 ist mit dem Kupplungsstück 22 verbunden und treibt das zweite Kupplungsstück 22 an. In das zweite Kupplungsstück 22 kann vom Führungstrichter 35 an der Unterseite der Getriebeeinheit 4 aus ein Rühr- oder Knetwerkzeug eingesteckt werden kann. Das erste Planetenrad 25 ist mit der Hohlwelle 24 verbunden und treibt die Hohlwelle 24 an. Die Hohlwelle 24 weist im Inneren ein entsprechendes Passungsprofil auf, in das ein passendes Rühr- oder Knetwerkzeug eingesteckt werden kann. Insofern hängt es von dem Profil des Schafts des jeweiligen Rühr- oder Knetwerkzeugs ab, ob das Werkzeug durch das Kupplungsstück 22 oder durch die Hohlwelle 24 angetrieben wird.

Anhand von Figur 3 ist erkennbar, dass die Hohlwelle 24 innerhalb der rotierbaren Trägereinheit 23 drehbar gelagert ist. Dabei wird durch die Umlaufbewegung des ersten Planetenrads 25, das angetrieben vom ersten Sonnenrad 20 entlang des ersten innenverzahnten Zahnkranzes 26 abrollt, auch die Rotation der rotierbaren Trägereinheit 23 vorgegeben, die der Bewegung des ersten Planetenrads 25 folgt und somit als Planetenträger für das erste Planetenrad 25 fungiert. Dabei ist die rotierbare Trägerinheit 23 auf einem umlaufenden Wälzlager 36 gelagert. An die rotierbare Trägereinheit 23 ist ein nabenartiger Ansatz angeformt, der als abtriebsseitige Ausgangswelle 29 verwendet werden kann.

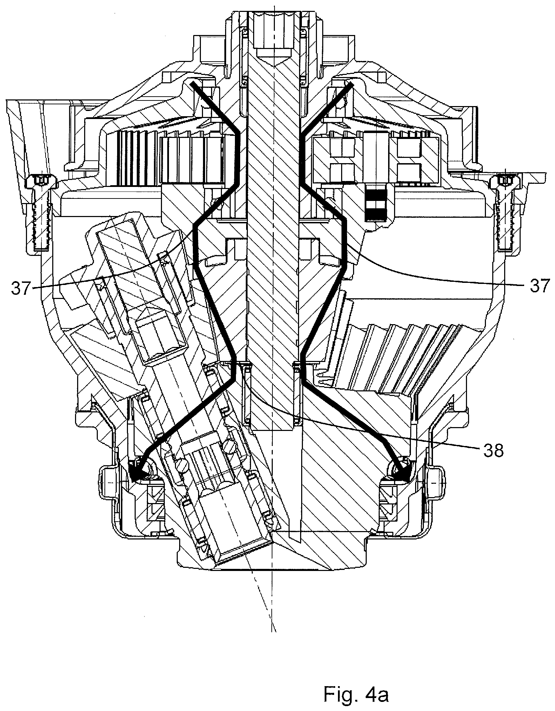

Figur 4a zeigt den Kraftfluss durch die Getriebeeinheit 4, wobei in Figur 4a die für den Kraftfluss relevanten Bezugszeichen eingezeichnet sind und darüber hinaus auf Figur 3 verwiesen wird. Wie in Fig. 4a durch Pfeile 37 veranschaulicht ist, erfolgt die Kraftübertragung von der Riemenscheibe 11 über die Eingangswelle 12, das dritte Sonnenrad 14 und den Planententräger 17 zum zweiten Sonnenrad 19 und zum ersten Sonnenrad 20 und von dort zu der rotierbaren Trägereinheit 23, zum Kupplungsstück 22 und zur Hohlwelle 24. Wenn man die Kraft- bzw. Leistungsübertragung in axialer Richtung vom oberen Ende zum unteren Ende der Getriebeeinheit 4 betrachtet, werden Kraft und Drehmoment abwechselnd nach innen zur zentralen Drehachse und wieder nach außen geführt, um auf diese Weise die eingekoppelte Leistung von einem Ende des Gehäuses 13 zum anderen Ende des Gehäuses 13 zu übertragen. Kraft und Drehmoment werden in einem sich abwechselnd verengenden und aufweitenden Verlauf in axialer Richtung geführt, wobei sich abschnittsweise zum Beispiel ein V-förmiger Verlauf, ein A-förmiger Verlauf oder ein ein- oder mehrfach X-förmiger Verlauf der Kraftübertragung ergeben kann.

Dabei ist bei dem in Figur 4a gezeigten Beispiel das erste Sonnenrad 20 unmittelbar auf der rotierbaren Trägereinheit 23 gelagert und steht am Auflagebereich 38 in unmittelbarem Kontakt mit der rotierbaren Trägereinheit 23. Infolge der Lagerung des ersten Sonnenrads 20 auf der rotierbaren Trägereinheit 23 ergibt sich eine nahe an der zentralen Achse 28 verlaufende Kraftübertragung von dem ersten Sonnenrad 20 zur rotierbaren Trägereinheit 23. Das erste Sonnenrad 20 kann unmittelbar mit dem Auflagebereich 38 der rotierbaren Trägereinheit 23 in Kontakt stehen, kann aber auch mittels eines Gleit- oder Rolllagers oder eines Axiallagers auf der rotierbaren Trägereinheit 23 gelagert sein. Die unmittelbare Lagerung des ersten Sonnenrads 20 auf der rotierbaren Trägereinheit 23 stellt eine platzsparende und kostengünstige Lösung dar, bei der sich die Zahnräder innerhalb des Gehäuses 13 gegenseitig stützen.

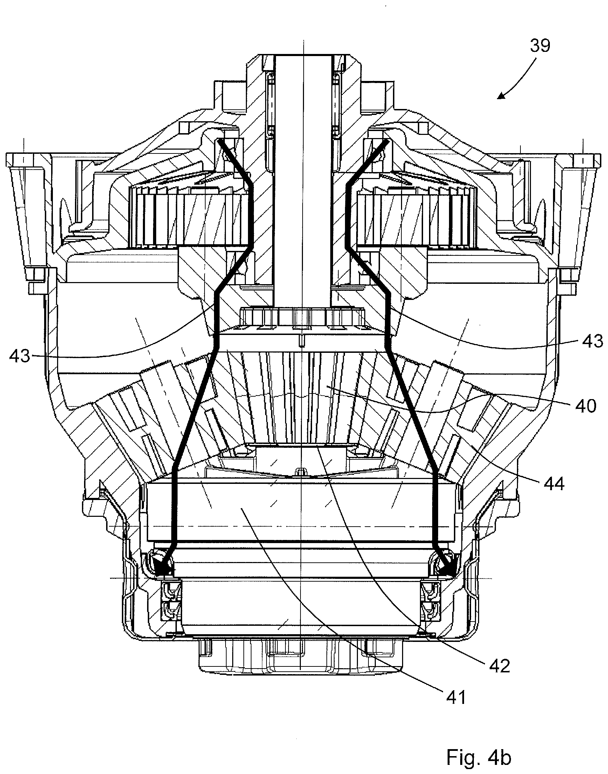

Figur 4b zeigt den Kraftfluss durch eine alternativ ausgelegte Getriebeeinheit 39, bei der anders als bei der in Figur 4a gezeigten Getriebeeinheit 4 zwischen einem ersten Sonnenrad 40 und einer rotierbaren Trägereinheit 41 ein Spalt 42 vorgesehen ist, so dass das erste Sonnenrad 40 nicht unmittelbar auf der rotierbaren Trägereinheit 41 gelagert ist. Durch den fehlenden unmittelbaren Kontakt zwischen dem ersten Sonnenrad 40 und der rotierbaren Trägereinheit 41 ergibt sich bei der Getriebeeinheit 39 ein anderer Verlauf der Kraftübertragung als bei der in Figur 4a gezeigten Getriebeeinheit 4, wobei der Kraftfluss in Figur 4b durch Pfeile 43 veranschaulicht ist. Die Kraftübertragung vom ersten Sonnenrad 40 zu der rotierbaren Trägereinheit 41 erfolgt in Figur 4b über Planetenräder 44, die auf der rotierbaren Trägereinheit 41 rotierbar gelagert sind und über die die Kraft- bzw. Leistungsübertragung auf die rotierbare Trägereinheit 41 erfolgt. Anhand der in Figur 4b gezeigten Pfeile 43 ist erkennbar, dass die Kraft- und Leistungsübertragung auf die rotierbare Trägereinheit 41 relativ weit außen erfolgt und nicht wie in Figur 4a gezeigt nahe an der zentralen Achse 28 der Getriebeeinheit 4. Durch den Abstand zwischen der rotierbaren Trägereinheit 41 und dem ersten Sonnenrad 40 wird also erreicht, dass die Kraftübertragung auf die rotierbare Trägereinheit 41 aufgeweitet wird und nach außen verlagert erfolgt. Durch diese Aufweitung des Kraft- bzw. Leistungsflusses wird beim Antrieb der rotierbaren Trägereinheit 41 die Stabilität, Festigkeit und Belastbarkeit des rotierenden Antriebs erhöht. Durch die Bereitstellung eines Spalts 42 zwischen dem ersten Sonnenrad 40 und der rotierbaren Trägereinheit 41 wird die Kraftübertragung nach außen verlagert, wodurch die Stabilität beim Antrieb der rotierbaren Trägereinheit 41 verbessert wird.

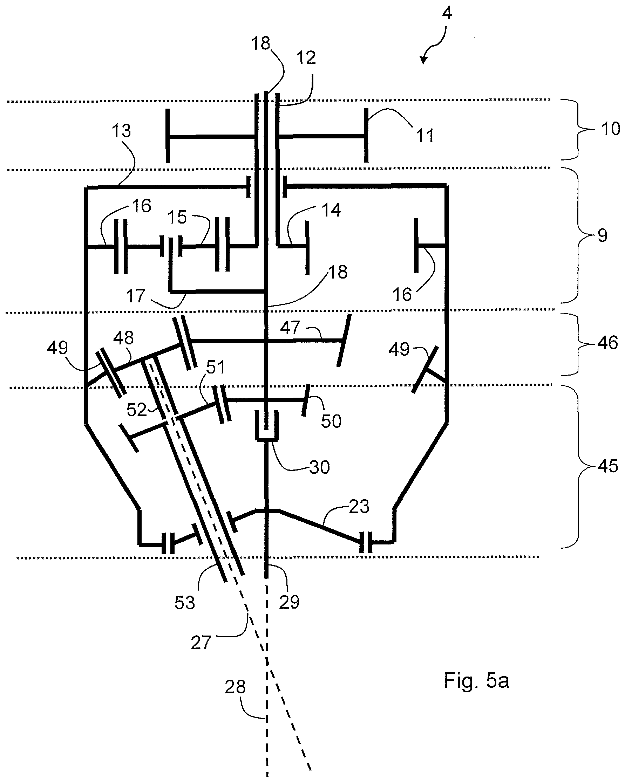

Figur 5a zeigt eine weitere schematische Darstellung, welche ebenfalls vier übereinander angeordnete Getriebestufen 45, 46, 9 und 10 umfasst, nämlich in der Reihenfolge von unten nach oben eine erste Getriebestufe 45, eine zweite Getriebestufe 46, eine dritte Getriebestufe 9 und eine vierte Getriebestufe 10. Dabei stimmen die dritte Getriebestufe 9 und die vierte Getriebestufe 10 identisch mit der in Figur 2 gezeigten dritten Getriebestufe 9 und vierten Getriebestufe 10 überein. Die Funktion der ersten Getriebestufe 45 und der zweiten Getriebestufe 46 ist jedoch im Vergleich zu Figur 2 vertauscht. Die in Figur 5a gezeigte zweite Getriebestufe 46 umfasst ein zweites Sonnenrad 47, das mit dem zweiten Planetenrad 48 kämmend in Eingriff steht. Darüber hinaus steht das zweite Planetenrad 48 in Eingriff mit einem ersten innenverzahnten Zahnkranz 49, der sich entlang der Innenwandung des Gehäuses 13 erstreckt. Mit der abtriebsseitigen Ausgangswelle 18 ist außerdem ein erstes Sonnenrad 50 der ersten Getriebestufe 45 verbunden, das kämmend mit einem ersten Planetenrad 51 in Eingriff steht. Durch das zweite Planetenrad 48 wird ein Kupplungsstück 52 angetrieben, in das von der Unterseite der Getriebeeinheit 4 aus ein Rühr- oder Knetwerkzeug einsteckbar ist. Durch das erste Planetenrad 51 wird eine Hohlwelle 53 angetrieben, in die ebenfalls von der Unterseite der Getriebeeinheit 4 aus ein Rühr- oder Knetwerkzeug eingesteckt werden kann. Das Kupplungsstück 52 und die Hohlwelle 53 sind beide in der rotierbaren Trägereinheit 23 rotierbar gelagert. In Figur 5a sind im Vergleich zur Figur 2 also im Wesentlichen die Funktionen der ersten Getriebestufe 45 und der zweiten Getriebestufe 46 miteinander vertauscht. Insbesondere wird in Figur 5a die Rotation der rotierbaren Trägereinheit 23 durch die Abwälzung des zweiten Planetenrads 48 am ersten innenverzahnten Zahnkranz 49 festgelegt.

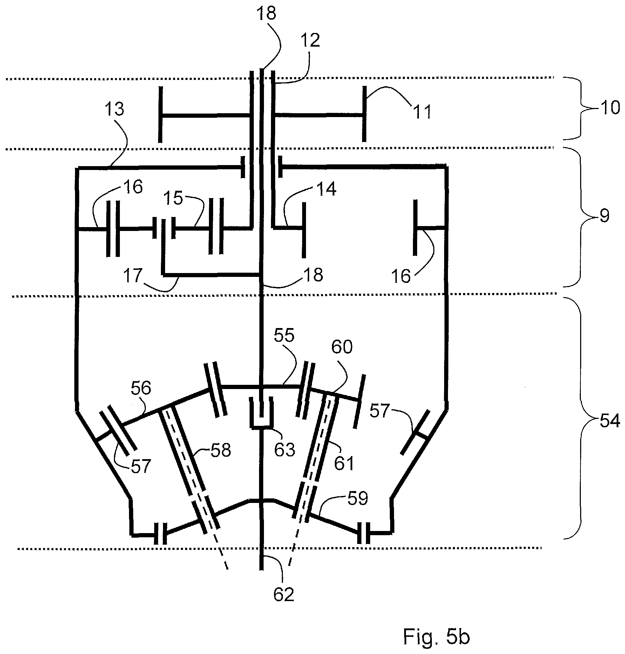

Ein weiteres Ausführungsbeispiel ist in Figur 5b gezeigt, welche ebenfalls eine aus mehreren Getriebestufen aufgebaute Getriebeeinheit zeigt. Allerdings umfasst die in Figur 5b gezeigte Getriebeeinheit drei Getriebestufen, nämlich eine kombinierte erste und zweite Getriebestufe 54, eine dritte Getriebestufe 9 und eine vierte Getriebestufe 10, wobei die dritte Getriebestufe 9 und die vierte Getriebestufe 10 wieder mit der in Figur 2 und 5a gezeigten dritten Getriebestufe 9 und der vierten Getriebestufe 10 übereinstimmt.

Die erste und zweite Getriebestufe 54 umfasst ein erstes Sonnenrad 55, das mit der abtriebsseitigen Ausgangswelle 18 verbunden ist und kämmend mit einem ersten Planetenrad 56 in Eingriff steht, das seinerseits mit einem entlang der Innenwandung des Gehäuses 13 umlaufenden ersten innenverzahnten Zahnkranz 57 kämmt. Das erste Planetenrad 56 ist mit einem Kupplungsstück 58 verbunden, das in der rotierbaren Trägereinheit 59 rotierbar gelagert ist, wobei in das Kupplungsstück 58 von der Unterseite der Getriebeeinheit 4 aus ein Rühr- oder Knetwerkzeug einsteckbar ist. Darüber hinaus umfasst die erste und zweite Getriebestufe 54 ein weiteres Planetenrad 60, das jedoch nicht mit dem ersten innenverzahnten Zahnkranz 57 kämmt. Dieses weitere Planetenrad 60 ist mit einem weiteren Kupplungsstück 61 verbunden, das ebenfalls in der rotierbaren Trägereinheit 59 rotierbar gelagert ist. Bei dem in Figur 5b gezeigtem Beispiel wird die Rotation der rotierbaren Trägereinheit 59 durch die Abwälzung des ersten Planetenrads 56 auf dem ersten innenverzahnten Zahnkranz 57 festgelegt, wobei das weitere Planetenrad 60 dieser vorgegebenen Bewegung folgt. Infolge der unterschiedlichen Durchmesser der beiden Planetenräder 56 und 60 werden durch die beiden Kupplungsstücke 58 und 61 jeweils unterschiedliche Rotationsgeschwindigkeiten und Drehmomente zur Verfügung gestellt. Dabei ist im Unterschied zu den in Figur 2 und Figur 5a gezeigten Beispielen für jedes der Kupplungsstücke 58 und 61 jeweils ein eigene Einstecköffnung in der rotierbaren Trägereinheit 59 vorgesehen, über die ein Rühr- oder Knetwerkzeug in das jeweilige Kupplungsstück eingesteckt werden kann. Die rotierbare Trägereinheit 59 ist mit der abtriebsseitigen Ausgangswelle 62 verbunden, die durch die rotierbare Trägereinheit 59 in eine vergleichsweise langsame Rotation versetzt wird. Die abtriebsseitige Ausgangswelle 62 stellt den unteren Abschnitt der zentralen Welle der Getriebeeinheit 4 dar und ist über ein Drehlager 63 mit der abtriebsseitigen Ausgangswelle 18 gekoppelt.

Die Getriebeeinheit 4, die mindestens drei übereinander angeordnete Getriebestufen aufweist, ist kompakt und platzsparend aufgebaut und eignet sich insbesondere zum Einbau in den Arm 3 einer Küchenmaschine 1. Die Getriebeeinheit 4 ist in der Lage, an der Oberseite der Küchenmaschine eine oder mehrere abtriebsseitige erste Ausgangswellen zur Verfügung zu stellen, ein oder mehrere Kupplungsstücke 22, 24 rotierend anzutreiben und darüber hinaus die rotierbare Trägereinheit 23 anzutreiben.

Dabei wird durch die Realisierung mit Hilfe von Planentengetriebestufen eine symmetrische oder zumindest weitgehend symmetrische Auslegung der Getriebeeinheit 4 ermöglicht, die die Entstehung von Unwuchten und Vibrationen zu vermeiden hilft. Außerdem kann, wie in Figur 3 gezeigt ist, zwischen den einzelnen Getriebestufen weitgehend auf die Anordnung von Zwischenwänden verzichtet werden, so dass die einzelnen Zahnräder der verschiedenen Getriebestufen einander gegenseitig positionieren und fixieren, so dass eine selbstjustierende Anordnung der Zahnräder der verschiedenen übereinander angeordneten Getriebestufen in dem gemeinsamen Gehäuse 13 ermöglicht wird. Dabei wird die Übertragung von Drehmomenten und Drehgeschwindigkeiten zwischen den einzelnen Getriebestufen und Planetengetriebestufen insbesondere über zentrale Wellen bzw. zentrale Hohlwellen durchgeführt, die hierzu wie in Fig. 2 gezeigt in mehrere unterschiedlich antreibbare Unterabschnitte aufgeteilt werden können.

### Bezugszeichenliste

- 1: Küchenmaschine
- 2: Rührschüssel
- 3: Arm der Küchenmaschine
- 4: Getriebeeinheit
- 5: koaxiale Ausgangswellen
- 6: Rühr- oder Knetwerkzeug
- 7: erste Getriebestufe
- 8: zweite Getriebestufe
- 9: dritte Getriebestufe
- 10: vierte Getriebestufe
- 11: Riemenscheibe
- 12: antriebsseitige Eingangswelle
- 13: Gehäuse
- 14: drittes Sonnenrad
- 15: drittes Planetenrad
- 16: zweiter innenverzahnter Zahnkranz
- 17: Planetenträger
- 18: abtriebsseitige Ausgangswelle
- 19: zweites Sonnenrad
- 20: erstes Sonnenrad
- 21: zweites Planetenrad
- 22: Kupplungsstück
- 23: rotierbare Trägereinheit
- 24: Hohlwelle
- 25: erstes Planetenrad
- 26: erster innenverzahnter Zahnkranz
- 27: Achse des Kupplungsstücks 22 und der Hohlwelle 24
- 28: zentrale Achse
- 29: abtriebsseitige Ausgangswelle
- 30: Drehlager
- 31: Wälzlager
- 32: Wälzlager
- 33: Mitnahmeprofil
- 34: Axiallager
- 35: Führungstrichter
- 36: Wälzlager
- 37: Pfeile
- 38: Auflagebereich
- 39: Getriebeeinheit
- 40: erstes Sonnenrad
- 41: rotierbare Trägereinheit
- 42: Spalt
- 43: Pfeile
- 44: Planetenräder
- 45: erste Getriebestufe
- 46: zweite Getriebestufe
- 47: zweites Sonnenrad
- 48: zweites Planetenrad
- 49: erster innenverzahnter Zahnkranz
- 50: erstes Sonnenrad
- 51: erstes Planetenrad
- 52: Kupplungsstück
- 53: Hohlwelle
- 54: erste und zweite Getriebestufe
- 55: erstes Sonnenrad
- 56: erstes Planetenrad
- 57: erster innenverzahnter Zahnkranz
- 58: Kupplungsstück
- 59: rotierbare Trägereinheit
- 60: weiteres Planetenrad
- 61: weiteres Kupplungsstück
- 62: abtriebsseitige Ausgangswelle
- 63: Drehlager

## Patentansprüche

1. Eine Getriebeeinheit (4) für eine Küchenmaschine (1), welche aufweist eine antriebsseitige Eingangswelle (12),
eine oder mehrere abtriebsseitige erste Ausgangswellen (5, 18), die an einer Oberseite der Getriebeeinheit austreten,
eine im unteren Bereich der Getriebeeinheit (4) angeordnete rotierbare Trägereinheit (23),
ein oder mehrere in der rotierbaren Trägereinheit (23) gelagerte Kupplungsstücke (22, 24, 52, 53, 58, 61) für abtriebsseitige zweite Ausgangswellen an einer Unterseite der Getriebeeinheit (4),
wobei die Getriebeeinheit (4) drei oder mehr übereinander angeordnete Getriebestufen (7, 8, 9, 10, 45, 46, 54) aufweist, die dazu ausgelegt sind, eine Rotation der antriebsseitigen Eingangswelle (12) in eine jeweilige Rotation der abtriebsseitigen ersten Ausgangswellen (5, 18), der Kupplungsstücke (22, 24, 52, 53, 58, 61) für abtriebsseitige zweite Ausgangswellen und der rotierbaren Trägereinheit (23) umzusetzen.

2. Eine Getriebeeinheit (4) nach Anspruch 1, **dadurch gekennzeichnet, dass** die übereinander angeordneten Getriebestufen (7, 8, 9, 10, 45, 46, 54) konzentrisch zueinander angeordnet sind.

3. Eine Getriebeeinheit (4) nach Anspruch 1 oder Anspruch 2, **dadurch gekennzeichnet, dass** die übereinander angeordneten Getriebestufen (7, 8, 9, 10, 45, 46, 54) jeweils drehsymmetrisch bezüglich einer zentralen Achse (28) der Getriebeeinheit (4) ausgebildet sind.

4. Eine Getriebeeinheit (4) nach einem der Ansprüche 1 bis 3, **dadurch gekennzeichnet, dass** zumindest einige der übereinander angeordneten Getriebestufen (7, 8, 9, 45, 46, 54) innerhalb eines gemeinsamen Gehäuses (13) der Getriebeeinheit (4) angeordnet sind, wobei zwischen den Getriebestufen (7, 8, 9, 45, 46, 54) keine das Gehäuse unterteilenden Zwischenwandungen vorgesehen sind.

5. Eine Getriebeeinheit (4) nach einem der Ansprüche 1 bis 4, **dadurch gekennzeichnet, dass** zumindest einige der übereinander angeordneten Getriebestufen (7, 8, 9, 45, 46, 54) innerhalb eines gemeinsamen Gehäuses (13) der Getriebeeinheit (4) angeordnet sind, wobei zumindest einige der im gemeinsamen Gehäuse (13) angeordneten Getriebestufen (7, 8, 9, 45, 46, 54) Zahnräder aufweisen, wobei die Zahnräder der verschiedenen Getriebestufen (7, 8, 9, 45, 46, 54) im Gehäuse (13) einander gegenseitig in Position halten und fixieren.

6. Eine Getriebeeinheit (4) nach einem der Ansprüche 1 bis 5, **dadurch gekennzeichnet, dass** die Getriebeeinheit (4) zwei oder mehr abtriebsseitige erste Ausgangswellen (5, 18) aufweist, die zueinander koaxial sind.

7. Eine Getriebeeinheit (4) nach einem der Ansprüche 1 bis 6, **dadurch gekennzeichnet, dass** die ein oder mehreren Kupplungsstücke (22, 24, 52, 53, 58, 61) für abtriebsseitige zweite Ausgangswellen dazu ausgelegt sind, sich in der rotierbaren Trägereinheit (23) gelagert um eine zentrale Achse (28) der Getriebeeinheit (4) zu drehen und zugleich um die eigene Achse (27) zu rotieren.

8. Eine Getriebeeinheit (4) nach einem der Ansprüche 1 bis 7, **dadurch gekennzeichnet, dass** die drei oder mehr übereinander angeordneten Getriebestufen (7, 8, 9, 10, 45, 46, 54) mindestens eine Planetengetriebestufe (7, 8, 9, 45, 46, 54) umfassen.

9. Eine Getriebeeinheit (4) nach einem der Ansprüche 1 bis 8, **dadurch gekennzeichnet, dass** die drei oder mehr übereinander angeordneten Getriebestufen eine erste Planetengetriebestufe (9) umfassen, die eine Rotation der mit einem Sonnenrad (14) verbundenen Eingangswelle (12) in eine langsamere Rotation eines Planetenträgers (17) umsetzt, der mit einer der einen oder mehreren ersten Ausgangswellen (18) verbunden ist.

10. Eine Getriebeeinheit (4) nach einem der Ansprüche 1 bis 9, **dadurch gekennzeichnet, dass** die drei oder mehr übereinander angeordneten Getriebestufen (7, 8, 9, 10, 45, 46, 54) eine Planetengetriebestufe (7, 8, 45, 46, 54) umfassen, wobei eines der Planetenräder (21, 25, 48, 51, 56, 60) der Planetengetriebestufe eines der Kupplungsstücke (22, 24, 52, 53, 58, 61) für abtriebsseitige zweiten Ausgangswellen antreibt.

11. Eine Getriebeeinheit (4) nach einem der Ansprüche 1 bis 10, **dadurch gekennzeichnet, dass** durch die eine oder mehreren koaxial zueinander an der Oberseite der Getriebeeinheit (4) austretenden abtriebsseitigen ersten Ausgangswellen (5, 18) und die antriebsseitige Eingangswelle (12) eine Vielzahl von unterschiedlichen Aufsätzen oder Gerätschaften antreibbar ist.

12. Eine Getriebeeinheit (4) nach einem der Ansprüche 1 bis 11, **dadurch gekennzeichnet, dass** die Getriebeeinheit (4) zwei oder mehrere in der rotierbaren Trägereinheit (23) gelagerte Kupplungsstücke (22, 24, 52, 53) für abtriebsseitige zweite Ausgangswellen aufweist, die mit unterschiedlichen Rotationsgeschwindigkeiten antreibbar sind.

13. Eine Küchenmaschine (1), welche eine Getriebeeinheit (4) nach einem der Ansprüche 1 bis 12 umfasst.

14. Eine Getriebeeinheit (4) für eine Küchenmaschine (1), welche aufweist
eine antriebsseitige Eingangswelle (12),
eine oder mehrere abtriebsseitige erste Ausgangswellen (5, 18), die an einer Oberseite der Getriebeeinheit (4) austreten, wobei die eine oder mehreren ersten Ausgangswellen (5, 18) zueinander und zu der antriebsseitigen Eingangswelle (12) koaxial angeordnet sind,
eine im unteren Bereich der Getriebeeinheit (4) angeordnete rotierbare Trägereinheit (23),
**dadurch gekennzeichnet, dass**
die Getriebeeinheit (4) zwei oder mehrere in der rotierbaren Trägereinheit (23) gelagerte Kupplungsstücke (22, 24) für abtriebsseitige zweite Ausgangswellen an einer Unterseite der Getriebeeinheit (4) aufweist, die koaxial zueinander angeordnet sind und mit unterschiedlichen Rotationsgeschwindigkeiten antreibbar sind.

15. Eine Küchenmaschine (1), welche eine Getriebeeinheit nach Anspruch 14 umfasst.

## Claims

1. Transmission unit (4) for a food processor (1), which has
an input shaft (12) on the drive side,
one or more first output shafts (5, 18) on the driven side, which project at an upper side of the transmission unit,
a rotary carrier unit (23) arranged in the lower region of the transmission unit (4),
one or more coupling pieces (22, 24, 52, 53, 58, 61), mounted in the rotary carrier unit (23), for second driven-side output shafts at a lower side of the transmission unit (4),
wherein the transmission unit (4) has three or more gear stages (7, 8, 9, 10, 45, 46,54) that are arranged one above the other and are constructed to convert a rotation of the drive-side input shaft (12) into a respective rotation of the first driven-side output shafts (5, 18), the coupling pieces (22, 24, 52, 53, 58, 61) for second driven-side output shafts, and the rotary carrier unit (23).

2. Transmission unit (4) according to claim 1, **characterised in that** the gear stages (7, 8, 9, 10, 45, 46, 54) that are arranged one above the other are arranged concentrically.

3. Transmission unit (4) according to claim 1 or claim 2, **characterised in that** the gear stages (7, 8, 9, 10, 45, 46, 54) arranged one above the other each take a form that is rotationally symmetrical in relation to a central axis (28) of the transmission unit (4).

4. Transmission unit (4) according to one of claims 1 to 3, **characterised in that** at least some of the gear stages (7, 8, 9, 45, 46, 54) arranged one above the other are arranged within a common housing (13) of the transmission unit (4), wherein no intermediate walls dividing the housing are provided between the gear stages (7, 8, 9, 45, 46, 54).

5. Transmission unit (4) according to one of claims 1 to 4, **characterised in that** at least some of the gear stages (7, 8, 9, 45, 46, 54) arranged one above the other are arranged within a common housing (13) of the transmission unit (4), wherein at least some of the gear stages (7, 8, 9, 45, 46, 54) arranged in the common housing (13) have toothed wheels, wherein the toothed wheels of the different gear stages (7, 8, 9, 45, 46, 54) in the housing (13) mutually keep one another in position and fix one another.

6. Transmission unit (4) according to one of claims 1 to 5, **characterised in that** the transmission unit (4) has two or more first driven-side output shafts (5, 18), which are coaxial in relation to one another.

7. Transmission unit (4) according to one of claims 1 to 6, **characterised in that** the one or more coupling pieces (22, 24, 52, 53, 58, 61) for second driven-side output shafts are constructed to rotate, mounted in the rotary carrier unit (23), about a central axis (28) of the transmission unit (4), and at the same time to rotate about their own axis (27).

8. Transmission unit (4) according to one of claims 1 to 7, **characterised in that** the three or more gear stages (7, 8, 9, 10, 45, 46, 54) that are arranged one above the other comprise at least one planetary gear stage (7, 8, 9, 45, 46, 54).

9. Transmission unit (4) according to one of claims 1 to 8, **characterised in that** the three or more gear stages that are arranged one above the other comprise a first planetary gear stage (9) that converts rotation of the input shaft (12) that is connected to a sun wheel (14) into a slower rotation of a planet carrier (17) that is connected to one of the one or more first output shafts (18).

10. Transmission unit (4) according to one of claims 1 to 9, **characterised in that** the three or more gear stages (7, 8, 9, 10, 45, 46, 54) that are arranged one above the other comprise a planetary gear stage (7, 8, 45, 46, 54), wherein one of the planet wheels (21, 25, 48, 51, 56, 60) of the planetary gear stage drives one of the coupling pieces (22, 24, 52, 53,58, 61) for second driven-side output shafts.

11. Transmission unit (4) according to one of claims 1 to 10, **characterised in that** as a result of the one or more mutually coaxial first driven-side output shafts (5, 18) projecting at the upper side of the transmission unit (4), and the drive-side input shaft (12), it is possible to drive a multiplicity of different attachments or equipment.

12. Transmission unit (4) according to one of claims 1 to 11, **characterised in that** the transmission unit (4) has two or more coupling pieces (22, 24, 52, 53) that are mounted in the rotary carrier unit (23), for second driven-side output shafts, which may be driven at different speeds of rotation.

13. Food processor (1) comprising a transmission unit (4) according to one of claims 1 to 12.

14. Transmission unit (4) for a food processor (1), which has
an input shaft (12) on the drive side,
one or more first output shafts (5, 18) on the driven side, which project at an upper side of the transmission unit (4), wherein the one or more first output shafts (5, 18) are arranged coaxially in relation to one another and to the drive-side input shaft (12),
a rotary carrier unit (23) arranged in the lower region of the transmission unit (4), **characterised in that**
the transmission unit (4) has at a lower side of the transmission unit (4) two or more coupling pieces (22, 24) that are mounted in the rotary carrier unit (23), for second driven-side output shafts, which are arranged coaxially in relation to one another and may be driven at different speeds of rotation.

15. Food processor (1) comprising a transmission unit according to claim 14.

## Revendications

1. Unité d'engrenage (4) pour un robot de cuisine (1), laquelle comprend
un axe d'entrée (12) côté entraînement,
un ou plusieurs premiers axes de sortie (5, 18) côté mené, qui ressortent sur un côté supérieur de l'unité d'engrenage,
une unité de support (23) rotative située dans la zone inférieure de l'unité d'engrenage (4),
une ou plusieurs pièces d'accouplement (22, 24, 52, 53, 58, 61) logées dans l'unité de support (23) rotative prévues pour des deuxièmes axes de sortie côté mené sur un côté inférieur de l'unité d'engrenage (4),
dans laquelle l'unité d'engrenage (4) comprend trois ou plus étages d'engrenage (7, 8, 9, 10, 45, 46, 54) superposés, réalisés pour convertir la rotation de l'axe d'entrée (12) côté entraînement en une rotation respective des premiers axes de sortie (5, 18) côté mené, des pièces d'accouplement (22, 24, 52, 53, 58, 61) pour des deuxièmes axes de sortie côté mené et de l'unité de support (23) rotative.

2. Unité d'engrenage (4) selon la revendication 1, **caractérisée en ce que** les étages d'engrenage (7, 8, 9, 10, 45, 46, 54) superposés sont situés concentriquement l'une par rapport à l'autre.

3. Unité d'engrenage (4) selon la revendication 1 ou la revendication 2, **caractérisée en ce que** les étages d'engrenage (7, 8, 9, 10, 45, 46, 54) superposés sont réalisés chacun symétriquement rotatif par rapport à un axe central (28) de l'unité d'engrenage (4).

4. Unité d'engrenage (4) selon l'une des revendications 1 à 3, **caractérisée en ce qu'**au moins quelques-uns des étages d'engrenage (7, 8, 9, 45, 46, 54) superposés sont situés à l'intérieur d'un bâti (13) commun de l'unité d'engrenage (4), dans laquelle aucune cloison intermédiaire subdivisant le bâti n'est prévue entre les étages d'engrenage (7, 8, 9, 45, 46, 54).

5. Unité d'engrenage (4) selon l'une des revendications 1 à 4, **caractérisée en ce qu'**au moins quelques-uns des étages d'engrenage (7, 8, 9, 45, 46, 54) superposés sont situés à l'intérieur d'un bâti (13) commun de l'unité d'engrenage (4), au moins quelques-uns des étages d'engrenage (7, 8, 9, 45, 46, 54) situés dans le bâti (13) commun comprenant des roues dentées, les roues dentées des différents étages d'engrenage (7, 8, 9, 45, 46, 54) dans le bâti (13) se maintenant et se fixant mutuellement en position.

6. Unité d'engrenage (4) selon l'une des revendications 1 à 5, **caractérisée en ce que** l'unité d'engrenage (4) comprend deux ou plus premiers axes de sortie (5, 18) côté mené, lesquels sont coaxiaux entre eux.

7. Unité d'engrenage (4) selon l'une des revendications 1 à 6, **caractérisée en ce que** la une ou plusieurs pièces d'accouplement (22, 24, 52, 53, 58, 61) pour les deuxièmes axes de sortie côté mené sont réalisées pour tourner, logées dans l'unité de support (23) rotative, autour de l'axe central (28) de l'unité d'engrenage (4) et effectuer en même temps une rotation autour de leur propre axe (27).

8. Unité d'engrenage (4) selon l'une des revendications 1 à 7, **caractérisée en ce que** les trois ou plus étages d'engrenage (7, 8, 9, 10, 45, 46, 54) superposés, comprennent au moins un étage d'engrenage planétaire (7, 8, 9, 10, 45, 46, 54).

9. Unité d'engrenage (4) selon l'une des revendications 1 à 8, **caractérisée en ce que** les trois ou plus étages d'engrenage superposés, comprennent un premier étage d'engrenage planétaire (9) qui convertit la rotation de l'axe d'entrée (12) raccordé à une roue solaire (14) en une rotation plus lente d'une cage d'engrenage planétaire (17), raccordée à l'un des un ou plusieurs premiers axes de sortie (18).

10. Unité d'engrenage (4) selon l'une des revendications 1 à 9, **caractérisée en ce que** les trois ou plus étages d'engrenage (7, 8, 9, 10, 45, 46, 54) superposés, comprennent au moins un étage d'engrenage planétaire (7, 8, 45, 46, 54), l'une des roues planétaires (21, 25, 48, 51, 56, 60) de l'étage d'engrenage planétaire entraînant l'une des pièces d'accouplement (22, 24, 52, 53, 58, 61) pour des deuxièmes axes de sortie côté mené.

11. Unité d'engrenage (4) selon l'une des revendications 1 à 10, **caractérisée en ce que** grâce au un ou plusieurs premiers axes de sortie (5, 18) côté mené situés coaxialement l'un par rapport à l'autre sur le côté supérieur de l'unité d'engrenage (4) et à l'axe d'entrée (12) côté entraînement, une pluralité de différents éléments à placer dessus ou de matériels peut être entraînée.

12. Unité d'engrenage (4) selon l'une des revendications 1 à 11, **caractérisée en ce que** l'unité d'engrenage (4) comprend deux ou plus pièces d'accouplement (22, 24, 52, 53) logées dans l'unité de support (23) rotative pour les deuxièmes axes de sortie côté mené, lesquels peuvent être entraînés à des vitesses de rotation différentes.

13. Robot de cuisine (1) comprenant une unité d'engrenage (4) selon l'une des revendications 1 à 12.

14. Unité d'engrenage (4) pour un robot de cuisine (1), laquelle comprend
un axe d'entrée (12) côté entraînement,
un ou plusieurs premiers axes de sortie (5, 18) côté mené situés sur un côté supérieur de l'unité d'engrenage (4), le un ou plusieurs premiers axes de sortie (5, 18) étant agencés coaxialement l'un par rapport à l'autre et par rapport à l'axe d'entrée (12) côté entraînement, une unité de support (23) rotative située dans la zone inférieure de l'unité d'engrenage (4),
**caractérisée en ce que**
l'unité d'engrenage (4) comprend deux ou plus pièces d'accouplement (22, 24) logées dans l'unité de support (23) rotative, prévues pour des deuxièmes axes de sortie côté mené sur un côté inférieur de l'unité d'engrenage (4), qui sont agencés coaxialement l'un par rapport à l'autre et peuvent être entraînés à des vitesses de rotation différentes.

15. Robot de cuisine (1) comprenant une unité d'engrenage selon la revendication 14.
